Europäisches Patentamt

European Patent Office

Office européen des brevets

(19)

(11) Veröffentlichungsnummer : **0 483 663 B1**

# (12) EUROPÄISCHE PATENTSCHRIFT

(45) Veröffentlichungstag der Patentschrift :
**13.09.95 Patentblatt 95/37**

(21) Anmeldenummer : **91118110.5**

(22) Anmeldetag : **24.10.91**

(51) Int. Cl.[6] : **H01P 1/20,** H01Q 15/00,
G02B 5/20

(54) **Bandpassfilter für elektromagnetische Strahlung.**

(30) Priorität : **29.10.90 DE 4034364**

(43) Veröffentlichungstag der Anmeldung :
**06.05.92 Patentblatt 92/19**

(45) Bekanntmachung des Hinweises auf die
Patenterteilung :
**13.09.95 Patentblatt 95/37**

(84) Benannte Vertragsstaaten :
**CH DE FR GB IT LI SE**

(56) Entgegenhaltungen :
**US-A- 3 924 239**
**US-A- 3 975 738**
**US-A- 4 160 254**
**19TH EUROPEAN MICROWAVE CONFEREN-**
**CE, 4-7 September 1989,London,GB, MICRO-**
**WAVE EXHIBITIONS AND PUBLISHERS LTD,**
**Kent, GB, 1989 T.E. O'CIARDHA et al.:"Modal**
**modelling of millimetre/submillimetre wave-**
**lenght filters" Seiten 474-479**
**JOURNAL OF VACUUM SCIENCE AND TECH-**
**NOLOGY: PART B., Bd. 3, Nr. 1, Januar 1985,**
**NEW YORK US, Seiten 268 - 271; D.M. BYRNE**
**ET AL.: 'Infrared mesh filters fabricated by**
**electron-beam lithography'**

(56) Entgegenhaltungen :
**APPLIED OPTICS. Bd. 20, Nr. 8, 15. April 1981,**
**NEW YORK US, Seiten 1361 - 1366; V.P.TOMA-**
**SELLI ET AL.: 'Far-infrared bandpass filters**
**from cross-shaped grids'**
**APPLIED OPTICS. Bd. 22, Nr. 11, 1. Juni 1983,**
**NEW YORK US Seiten 1775 - 1779; S.T.CHASE**
**ET AL.: 'Resonant array bandpass filters for**
**the far infrared'**
**ELEKTROTECHNISCHE ZEITSCHRIFT - ETZ.**
**Bd. 111, Nr. 24, Dezember 1990,BERLIN DE,**
**Seite 1232; 'Infrarotfilter für Weltraumobser-**
**vatorium'**

(73) Patentinhaber : **Forschungszentrum Karlsruhe**
**GmbH**
**Weberstrasse 5**
**D-76133 Karlsruhe (DE)**
(84) **CH DE FR GB LI**
Patentinhaber : **Ruprecht, Robert Dr.**
**Jahnstrasse 22**
**D-75045 Walzbachtal (DE)**
(84) **IT SE**

(72) Erfinder : **Ruprecht, Robert**
**Jahnstrasse 22**
**W-7519 Walzbachtal 2 (DE)**

(74) Vertreter : **Gottlob, Peter, Dipl. Ing.**
**Forschungszentrum Karlsruhe GmbH**
**Stabsabteilung**
**Patente und Lizenzen**
**Weberstrasse 5**
**D-76133 Karlsruhe (DE)**

EP 0 483 663 B1

## Beschreibung

Die Erfindung geht von einem Bandpaßfilter für elektromagnetische Strahlung nach dem Oberbegriff des Patentanspruchs 1.

Bei photometrischen Untersuchungen im Infrarotbereich werden breitbandige Halbleiter-Detektoren eingesetzt. Um bei den Messungen eine möglichst hohe spektrale Auflösung und damit genauere Aussagen über die zu untersuchenden Objekte zu erhalten, müssen die großen Empfindlichkeitsbereiche der Detektoren durch Bandpaßfilter definierter Bandbreite unterteilt werden.

Um die Meßbereiche optimal aufzuteilen, müßten die Bandpaßfilter ein rechteckförmiges Transmissionsprofil besitzen. Bedingt durch das Rechteckprofil würde sich ein scharf begrenztes Paßband ergeben. Aus der unendlich hohen Steigung der Flanke zwischen dem unterdrückten Spektralbereich und dem Paßband würde sich eine ideale Schärfe der Bandpaßfilter ergeben. Ein ideales Bandpaßfilter weist neben einer idealen Schärfe völlige Durchlässigkeit im Paßband und totale Absorption in den benachbarten Spektralbereichen auf.

In der Praxis ist die Schärfe von Bandpaßfiltern unterschiedlich gut, da die Steigung der Flanke zum Paßband von den Geometriemaßen der Filter abhängt. Eine gute Schärfe, d. h. eine hohe Steigung der niederfrequenten Flanke ist vor allem dann notwendig, wenn die niederfrequente Grenze des gewünschten Meßbereichs nicht mit der Empfindlichkeitsgrenze des Detektors zusammenfällt.

Bei R. Ulrich, Interference filters for far infrared; Appl. Opt. 7 (1968) Seiten 1987 bis 1996 sind Bandpaßfilter beschrieben, welche aus einer Metallmembran mit Schlitzaperturen bestehen, die periodisch angeordnet sind. Diese Bandpaßfilter werden als sogenannte "resonante Gitter" bezeichnet.

In den Kleinheubacher Berichte Nr. 29 (1986) auf den Seiten 501 bis 505 herausgegeben vom Fernmeldetechnischen Zentralamt, Postfach 5000, 6100 Darmstadt, wird von H.-P. Gemünd ein Verfahren beschrieben mit dessen Hilfe Mikrostrukturen auf einer Galvanikstartschicht hergestellt werden, die mit einer Glasplatte verbunden ist.

Die Gitterkonstanten liegen über 34 μm und die Filterdicke unter der Gitterkonstante.

Diese Bandpaßfilter haben jedoch eine nur beschränkte Dicke und somit ein unzureichendes Sperrverhalten.

Des weiteren sind aus PENG, S.T. et al.: Theory of Periodic Dielectric Waveguides. In: IEEE Transactions on Microwave Theory and Techniques, Vol. MTT-23, No. 1 Jan. 1975, Seiten 123 bis 133 dielektrische Wellenleiter bekannt, welche periodisch angeordnete Schlitzstrukturen aufweisen. Diese Strukturen eignen sich jedoch nicht als Bandpaßfilter.

Aufgabe der Erfindung ist es, ein Bandpaßfilter der eingangs genannten Art zur Verfügung zu stellen, der ein besseres Sperrverhalten hat.

Diese Aufgabe wird durch ein kennzeichnendes Merkmale des Patentanspruchs 1 gelöst.

Die übrigen Ansprüche beschreiben vorteilhafte Ausgestaltungen des Bandpaßfilters.

Die Erfindung wird im folgenden anhand der Figuren und zweier Ausführungsbeispiele näher erläutert.

Die Figuren 1 und 2 zeigen verschiedene Formen von Schlitzaperturen.

Figur 3 zeigt die Transmissionskurve eines Bandpaßfilters mit Tripolschlitzaperturen.

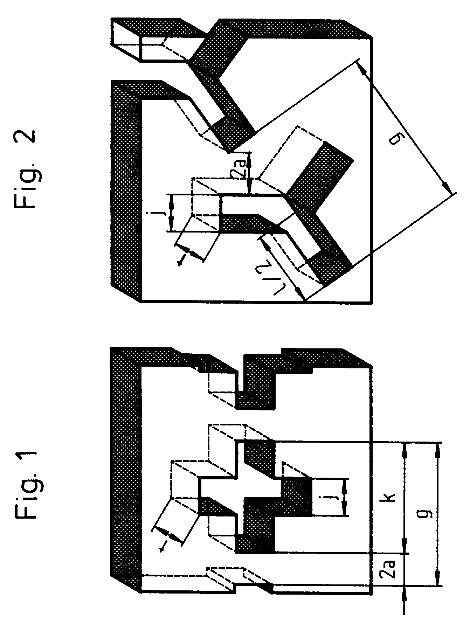

Bei den Schlitzaperturen von Figur 1 und Figur 2 stellt die Papierebene die Oberfläche von Filtermembranen der Filterdicke t dar. In Figur 1 ist ein Ausschnitt aus einer Kreuzschlitzanordnung der Schlitzlänge k gezeichnet, in Figur 2 ist eine Tripolschlitzaperaturen mit der Schenkellänge 1/2, beide mit der Schlitzbreite j. Der Abstand 2a der Schlitzaperturen ergibt sich aus der Schlitzgeometrie und der Gitterkonstante g.

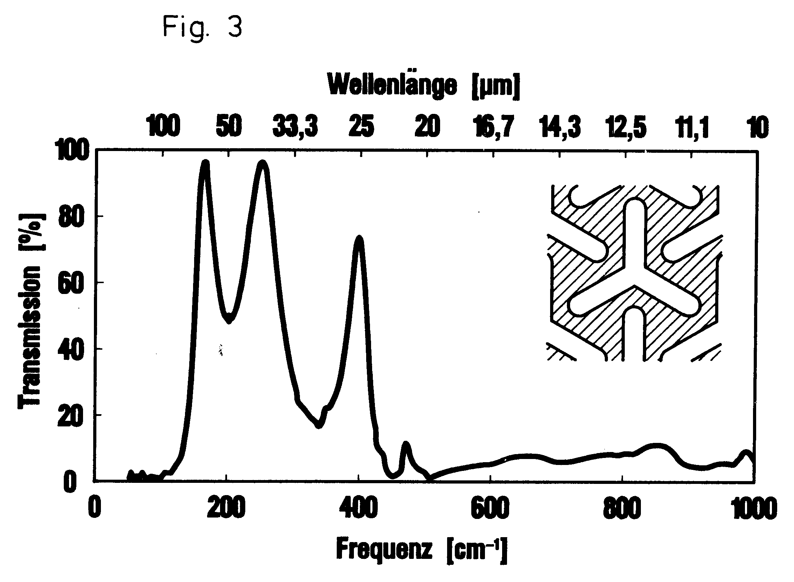

Figur 3 zeigt die Transmissionskurve eines 22 μm dicken Bandpaßfilters mit Tripolschlitzaperaturen gemäß Figur 2. Aufgetragen ist die Transmission in % bezüglich einer Lochblende über der Wellenzahl /cm$^{-1}$/ bzw. Wellenlänge /μm/. Die Transmissionskurve zeigt im Paßband vier Maxima zwischen dem niederfrequenten Sperrbereich und dem hochfrequenten Beugungsgebiet.

Die Bandpaßfilter gemäß den Figuren 1 und 2 zeichnen sich bei entsprechender Filterdicke t durch ein gutes Sperrverhalten und eine hohe Steigung der niederfrequenten Flanke aus und weisen je nach Schlitzaperturform unterschiedlich breite Paßbänder auf. Die Paßbänder von Bandpaßfilter mit Tripolschlitzaperaturen sind unabhängig von der Filterdicke breiter als die von Filtern mit Kreuzschlitzaperturen. Mit zunehmender Filterdicke steigt das Sperrverhalten und die Steigung der niederfrequenten Flanke. Mit zunehmender Filterdicke treten neben dem niederfrequenten Transmissionsmaximum weitere Maxima von der Wellenlänge her auf, die der Gitterkonstante entspricht, und nähern sich dem ersten niederfrequenten Maximum. Die Lage des niederfrequenten Maximums ist von der Filterdicke nahezu unabhängig. Die Lage weiterer Maxima wird durch die Filterdicke bestimmt.

Für eine Filterdicke kleiner als die halbe Gitterkonstante konnte eine gute Übereinstimmung in der Lage der Transmissionsmaxima zwischen den Ergebnissen einer in der Literatur beschriebenen Computersimulation und den experimentellen Messungen an Bandpaßfiltern festgestellt werden, die dicker waren als die 0,1-fache Gitterkonstante.

Die Bandpaßfilter wurden mit einer Gitterkonstante von 1,5 bis 35 μm gefertigt. Dazu stehen meh-

rere Verfahren zur Verfügung die sich einem lithographischen Verfahren und der Mikrogalvanoformung oder der Kunststoffabformung und der Mikrogalvanoformung bedienen. Die Filter werden entweder selbsttragend oder freitragend auf einem Rahmenträger gefertigt, damit nicht ein massives Substrat, das als Dieletrikum wirken würde, die Transmissionseigenschaften der Bandpaßfilter beeinflußt.

Die Herstellung erfolgt entweder auf einem mehrschichtigen oder zusammengesetzten Substrat.

Im Falle eines mehrschichtigen Substrats wird auf dieses mit Hilfe von lithographischen Verfahren eine polymere Komplementärstruktur eine Filters in einer Dicke hergestellt, die die Dicke des danach galvanisierten Filters übersteigt. Damit werden die Wände der Polymerstruktur durch Mikrogalvanoformung abgeformt und die Reststruktur nicht überwachsen. Nach dem Entfernen des Polymers wird auf die Filterstruktur ein Rahmenträger aufgeklebt. Vorteilhaft ist dabei ein gefüllter Kleber, damit ein guter Wärmeübergang vom Filter zum Rahmenträger erfolgt. Anschließend wird das Filter mit dem Rahmenträger von mehrschichtigen Substrat mechanisch entfernt.

Die Trennung erfolgt zwischen den Schichten oder in einer Schicht des mehrschichtigen Substrats. Wird eine Hilfsschicht mit dem Filter vom Substrat abgehoben, so wird sie anschließend selektiv gegen das Filtermetall entfernt. Dadurch entsteht ein Bandpaßfilter, der freitragend auf einem Blendering aufgespannt ist.

Die Filter, die dicker als 4 μm sind, können auch ohne Blendenring vom Substrat entfernt werden, indem die oberste Schicht des mehrschichtigen Substrats entfernt wird. Anschließend werden sie z. B. durch Diffusionsschweißen mit einem Rahmenträger verbunden. Bandpaßfilter, die dicker als 30 μm sind, sind auch ohne Rahmenträger ausreichend stabil und damit auch als selbsttragende Filter handhabbar.

Das zusammengesetzte Substrat besteht aus einem Kern, z. B. Titan, der selektiv gegen das Filtermaterial gelöst werden kann. Um diesen Kern wird zunächst ein Ring in gleichem Metall, z. B. Kupfer galvanisiert, aus dem das Filter hergestellt werden soll. Anschließend wird auf diesem zusammengesetzten Substrat ein lithographisches Verfahren und die Mikrogalvanoformung durchgeführt. Gleichzeitig mit der Herstellung des Filters auf dem Titankern findet eine Metallabscheidung auf dem Ring statt. Damit werden Trägerring und Filtermembran über einen Stoffschluß verbunden. Nach dem Entfernen des Polymers wird der Kern selektiv gegen das Filtermaterial herausgelöst. Dadurch entsteht ein freitragendes Filter.

Für ein Bandpaßfilter mit Tripolschlitzaperturen mit einer Schenkellänge von l/2 = 11,5 μm wurde unter Ausnutzung der Formel $\lambda = 2\,l\,\cos 30°$ die Lage des niederfrequenten, ersten Transmissionsmaximums bei 39,8 μm berechnet.

Dieser Wert stimmt innerhalb eines Intervalls von ± 2 % mit dem gemessenen Wert überein. Die Abweichung wird durch die Fertigungstoleranzen verursacht.

Als Beispiel für ein Bandpaßfilter mit Kreuzschlitzaperturen gemäß Figur 1 wurde ein Filter mit der Filterdicke t = 31 μm hergestellt. Die Kreuzschlitzaperturen weisen eine Schlitzlänge k = 18,5 μm und eine Schlitzbreite j = 3 μm auf. Die Gitterkonstante beträgt 20 μm, wodurch sich der Abstand 2a der Schlitzaperturen zu 1,5 μm ergibt. Gemäß Figur 2 wurden Bandpaßfilter mit Tripolschlitzaperturen der Filterdicke t = 34 μm gefertigt. Die Tripolschlitzaperturen haben eine Schenkellänge l/2 = 11,5 μm und eine Schlitzbreite j = 3 μm. Die Gitterkonstante beträgt g = 14,5 μm und der Abstand 2a = 0,9 μm. In Figur 3 ist eine gemessene Transmissionskurve eines t = 22 μm dicken Bandpaßfilters mit Tripolschlitzaperturen der Schenkellänge l/2 = 17 μm, der Schlitzbreite j = 5 μm, der Gitterkonstante g = 24,5 μm und dem Abstand 2a = 3,7 μm dargestellt.

Die Filterdicke t kann mit den beschriebenen Verfahren im Bereich von 0,2 μm bis 500 μm, die Gitterkonstante von 2 bis 1000 μm variiert werden. Die Schlitzlänge k, Schenkellänge l/2 und die Schlitzbreite j liegen mit ihrem Maß angepaßt an die Gitterkonstante g in einem vergleichbaren Bereich von 1 bis 1000 μm. Bei den lateralen Maße ist die obere Grenze von 1000 μm nur Richtmaß, kann jedoch ohne Schwierigkeiten auch überschritten werden. Kleine Maße als die angegebenen Untergrenzen lassen sich mit Hilfe der anderen lithographischen Verfahren realisieren.

Ein Bandpaßfilter, das auch eine Filterdicke von über 500 μm aufweist, läßt sich z. B. durch eine freitragende unstrukturierte Metallplatte herstellen, die durch Ionen-, Plasma- oder Laserprozesse (Excimer-Laser) strukturiert wird, worduch die Schlitzaperturen durch partiellen Materialabtrag der Metallmembran entstehen.

Weitere Vorteile des erfindungsgemäßen Bandpaßfilters sind im folgenden zusammengestellt.

Durch Gitterkonstanten von kleiner als 34 μm ist es möglich geworden Bandpaßfilter herzustellen deren Paßband unterhalb von 50 μm liegt.

Mit zunehmender Filterdicke wird das niederfrequente Sperrverhalten verbessert und die Steilheit der niederfrequenten Flanke nimmt zu. Die Bandpaßfilter können freitragend auf einem Rahmenträger oder selbsttragend sein.

Über die Formel $\lambda = 2\,l\cdot\cos 30°$ kann entweder aus der vorgegebenen Wellenlänge die Tripolschenkellänge bestimmt oder aus der Tripolschenkellänge die Lage des Paßbandes bestimmt werden.

**Patentansprüche**

1. Bandpaßfilter für elektromagnetische Strahlung, das aus einer Membran besteht, welche periodisch angeordnete Schlitzstrukturen aufweist, wobei ein Element der Schlitzstrukturen aus mindestens drei gleichlangen Schlitzen besteht, die sich in einem gemeinsamen Punkt treffen und die mit ihren jeweiligen Nachbarn alle den gleichen Winkel einschließen, dadurch gekennzeichnet, daß

a) die Membran, welche die Schlitzstrukturen aufweist, eine Dicke zwischen 33 bis 500 μm hat,

b) das Verhältnis von Membrandicke zur Gitterkonstanten, welche die Periodizität beschreibt, größer ist als 1.

2. Bandpaßfilter nach Anspruch 1, dadurch gekennzeichnet, daß die Gitterkonstante kleiner ist als 34 μm.

3. Bandpaßfilter nach Anspruch 1, dadurch gekennzeichnet, daß bei Tripolstrukturen durch die Wahl der Schenkellänge l/2 die Wellenlänge λ der Lage des niederfrequenten Maximums der Transmissionskurve des Bandpaßfilters mit Hilfe der Formel

$$\lambda = 2\,l \cdot \cos 30°$$

bestimmbar ist.

## Claims

1. Band-pass filter for electromagnetic radiation, which filter comprises a diaphragm having periodically disposed slotted structures, one element of the slotted structures comprising at least three slots of identical length, which meet at a common point and all form the same angle with their respective neighbours, characterised in that

a) the diaphragm, which includes the slotted structures, has a thickness of between 33 and 500 μm,

b) the ratio between the diaphragm thickness and the lattice constant, which describes the periodicity, is greater than 1.

2. Band-pass filter according to claim 1, characterised in that the lattice constant is smaller than 34 μm.

3. Band-pass filter according to claim 1, characterised in that, in the case of tripolar structures, by selecting the web length l/2, the wavelength λ for the position of the low-frequency maximum of the transmission curve of the band-pass filter is determinable by means of the formula

$$\lambda = 2\,l \cdot \cos 30°.$$

## Revendications

1. Filtre passe-bande pour radiation électromagnétique, filtre qui consiste en une membrane présentant des structures de fentes disposées de façon périodique, dans lequel un élément des structures de fentes se compose d'au moins trois fentes de même longueur qui se rejoignent en un point commun et qui forment toutes le même angle avec la fente voisine, filtre passe-bande caractérisé en ce que :

a) la membrane qui présente les structures de fentes a une épaisseur comprise entre 33 et 500 μm,

b) le rapport de l'épaisseur de la membrane à la constante de réseau, qui définit la périodicité, est supérieur à 1.

2. Filtre passe-bande selon la revendication 1, caractérisé en ce que la constante de réseau est inférieure à 34 μm.

3. Filtre passe-bande selon la revendication 1, caractérisé en ce que, dans le cas de structures tripolaires, on peut déterminer, par le choix de la longueur $\ell/2$ des ailes, la longueur d'onde λ de la position du maximum à basse fréquence de la courbe de transmission des filtres passe-bande, à l'aide de la formule :

$$\lambda = 2\ell \cdot \cos 30°$$

Fig. 1

Fig. 2

Fig. 3

EP 0 483 663 B1